# EUROPEAN PATENT APPLICATION

(11) **EP 2 426 654 A1**
(43) Date of publication of application: **07.03.2012**
(21) Application number: 11178799.0
(22) Date of filing: 25.08.2011
(51) Int. Cl.: G07F 11/00, G06Q 20/00, G07F 7/00, G07G 1/00

(54) **Commodity delivery apparatus, commodity delivery system and commodity delivery method**

(30) Priority: 03.09.2010 JP 2010197396
(71) Applicant: Japan Tobacco Inc., Minato-ku, Tokyo 105 (JP)
(72) Inventor: Miyoshi, Hiroyuki, Tokyo, 105-8422 (JP); Kushi, Yasuhiro, Tokyo, 105-8422 (JP); Yoshikawa, Kunji, Hyogo, 674-0067 (JP)
(74) Representative: HOFFMANN EITLE

(57) **Abstract**

A commodity delivery apparatus, including a box body having a commodity delivery port, an opening-and-closing mechanism to open-and-close the box body, a lock portion that controls the opening-and-closing mechanism so that only a person having a predetermined right can open-and-close the box body, a commodity housing chamber positioned inside the box body and housing a plurality of commodities of at least one type, a payment information acquisition unit that acquires payment information from a commodity purchase storage medium holding the payment information, and a commodity delivery unit that, if the payment information acquired by the payment information acquisition unit indicates that a payment for the commodity has been completed, extracts the commodity from the commodity housing chamber and delivers the commodity through the commodity delivery port.

## Description

### TECHNICAL FIELD

The present invention relates to a commodity delivery apparatus, a commodity delivery system, and a commodity delivery method.

### RELATED ART

For operators of stores that sell commodities such as convenience stores, supermarkets, and drugstores, one of important problems is to prevent criminal acts such as shoplifting in which commodities in the store are taken away without being paid for commodities.

To prevent shoplifting, for example, some stores arrange commodities whose outer shape is relatively small such as tobacco behind a register counter. An employee of such a store takes out a commodity arranged behind the register counter according to a customer's order and makes settlement of the commodity. Then, after the settlement is completed, the employee of the store hands the commodity over to the customer. In such stores, there is no opportunity for customers to directly touch commodities before the settlement of commodities is completed so that shoplifting can effectively be prevented.

Japanese Laid-open patent publication NO. H5-324674 proposes shopping facilities where customers can purchase commodities without touching commodities. That is, shopping facilities that specify commodity to purchase by using ID cards identifying customers are proposed.

Such shopping facilities include a display corner that displays various sample commodities to which a sales price and a code number are attached, an order entry terminal machine installed in a neighboring position of the display corner to specify input of a code number and a quantity of the commodity to purchase by associating with the ID card, a POS terminal that performs a check-out process by tallying input information input into the order entry terminal machine and verifying against the customer's ID card at the check-out, a commodity collecting unit that collects a relevant commodity by taking the commodity out of a warehouse based on input information input into the order entry terminal machine, and a commodity delivery unit that delivers the purchased commodity collected with the commodity collecting unit by verifying against the customer's ID card after the check-out process by the POS terminal. According to the shopping facilities, shoplifting can be prevented because customers do not touch commodities directly.

### SUMMARY

Criminal acts to make off with commodities in the store without payment for commodities include, in addition to shoplifting by customers, shoplifting by employees of the store.

In recent years, regarding expensive commodities like tobacco, an increase in shoplifting by employees of stores is newly detected. Therefore, it becomes necessary to prevent, in addition to shoplifting by customers, shoplifting by employees of stores.

However, while shoplifting by customers can be prevented by means of arranging commodities behind the register counter, shoplifting by employees of stores cannot be prevented by the means. This is because employees of stores can directly touch commodities.

Technology described in Japanese Laid-open patent publication NO. H5-324674 takes on the task of preventing customers from touching commodities before check-out, but does not assume at all to prevent "employees of stores" from touching commodities. Thus, employees of stores may handle, for example, commodities stored in a warehouse or container. Therefore, according to the technology described in Japanese Laid-open patent publication NO. H5-324674, shoplifting by employees of stores cannot be prevented.

It is desirable to provide a technology capable of preventing criminal acts such as shoplifting by not only customers but also employees of stores.

According to one embodiment of one aspect of the present invention, there is provided a commodity delivery apparatus including a box body having a commodity delivery port, an opening-and-closing mechanism to open-and-close the box body, a lock portion that controls the opening-and-closing mechanism so that only a person having a predetermined right can open-and-close the box body, a commodity housing chamber positioned inside the box body and housing a plurality of commodities of at least one type, a payment information acquisition unit that acquires payment information, which is information indicating whether a payment for the commodity has been completed, from a commodity purchase storage medium storing the payment information, and a commodity delivery unit that, if the payment information acquired by the payment information acquisition unit indicates that the payment for the commodity has been completed, extracts the commodity from the commodity housing chamber and delivers the commodity through the commodity delivery port.

According to another embodiment, there is provided a commodity delivery system including the above mentioned commodity delivery apparatus and a payment information rewrite apparatus having a rewrite apparatus side setting unit that sets the payment information stored in the commodity purchase storage medium to the information indicating that the payment for the commodity has been completed.

According to another embodiment, there is provided a program to control a commodity delivery apparatus including a box body having a commodity delivery port and a commodity housing chamber positioned inside the box body and housing a plurality of commodities of at least one type, wherein the program causes a computer to function as a payment information acquisition means that acquires payment information, which is information indicating whether a payment for the commodity has been completed, by communicating with a commodity purchase storage medium storing the payment information and a commodity delivery means that extracts the commodity from the commodity housing chamber and delivers the commodity through the commodity delivery port if the payment information acquired by the payment information acquisition means indicates that the payment for the commodity has been completed.

According to another embodiment, there is provided a commodity delivery method using a commodity delivery apparatus including a box body having a commodity delivery port and a commodity housing chamber positioned inside the box body and housing a plurality of commodities of at least one type, wherein the commodity delivery method includes acquiring payment information, which is information indicating whether a payment for the commodity has been completed, by communicating with a commodity purchase storage medium storing the payment information, taking out the commodity from the commodity housing chamber, and delivering the commodity through the commodity delivery port if the acquired payment information indicates that the payment for the commodity has been completed.

According to each of the above embodiments, only a person having a predetermined right can touch commodities housed in a commodity delivery apparatus. That is, customers and employees having no predetermined right are not allowed to touch commodities housed in the commodity delivery apparatus.

According to each of the above embodiments, the payment for commodity can be completed and the commodity can be delivered to the customer in a state in which customers and employees having no predetermined right do not touch commodities.

Thus, according to a commodity delivery system and a commodity delivery apparatus in each of such embodiments, criminal acts such as shoplifting by not only customers but also employees of stores can effectively be prevented.

According to each embodiment described above, criminal acts such as shoplifting by not only customers but also employees of stores.

### BRIEF DESCRIPTION OF THE DRAWINGS

The above and other objects, advantages and features of the present invention will be more apparent from the following description of certain preferred embodiments taken in conjunction with the accompanying drawings, in which:
Fig. 1 is a schematic diagram for explaining an example of a commodity delivery system in the embodiment;
Fig. 2 is a functional block diagram for explaining an example of the commodity delivery system in the embodiment;
Fig. 3 is a schematic diagram for explaining an example of an appearance of a commodity delivery apparatus in the embodiment;
Fig. 4 is a functional block diagram for explaining an example of the commodity delivery system in the embodiment;
Fig. 5 is a flow chart for explaining an example of a flow of processing of the commodity delivery system in the embodiment;
Fig. 6 is a schematic diagram for explaining an example of the appearance of the commodity delivery apparatus in the embodiment;
Fig. 7 is a functional block diagram for explaining an example of the commodity delivery system in the embodiment;
Fig. 8 is a functional block diagram for explaining an example of the commodity delivery system in the embodiment; and
Fig. 9 is a functional block diagram for explaining an example of the commodity delivery system in the embodiment.

### DETAILED DESCRIPTION

The invention will be now described herein with reference to illustrative embodiments. Those skilled in the art will recognize that many alternative embodiments can be accomplished using the teachings of the present invention and that the invention is not limited to the embodiments illustrated for explanatory purposes. Embodiments of the present invention will be described below using the drawings.

Each processing unit contained in the embodiments is realized by a program stored in a memory and executed by a Central Processing Unit (CPU). Any memory and CPU mounted in a common computer may be used. The program may be stored in the memory in the stage of apparatus shipment or may be acquired from a storage medium such as a Compact Disc (CD) or a server in a network such as the Internet before being stored in the memory. That is, each processing unit is realized by any combination of hardware such as the CPU, memory, storage unit such as a hard disk, and network connection interface and software. The realization form of each processing unit is not limited by the embodiments.

Functional block diagrams used for description of the embodiments show blocks in functional units. Examples in which each apparatus is realized by one device are shown in the embodiments, but each apparatus may be realized by a plurality of devices or a plurality of apparatuses may be realized by one device.

### «First embodiment»

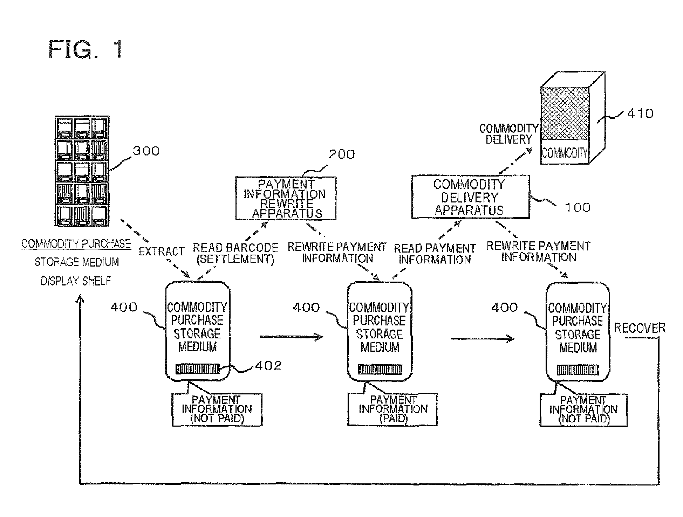

First, an overview of a commodity delivery system according to the embodiment will be explained using Fig. 1.

As illustrated in Fig. 1, the commodity delivery system according to the embodiment includes a commodity delivery apparatus 100, a payment information rewrite apparatus 200, and a commodity purchase storage medium 400. The commodity delivery system in the embodiment is used, for example, in a store such as a convenience store that sells commodities. Though the type of commodity is not specifically limited, a store selling tobacco 410 is taken as an example for the description below.

For example, an IC card can be used as the commodity purchase storage medium 400. The commodity purchase storage medium 400 has, for example, a barcode printed on the surface thereof as commodity identification information 402 to identify the type of tobacco 410. It is desirable to attach one piece of the commodity identification information 402 to one commodity purchase storage medium 400. In such a case, one commodity purchase storage medium 400 corresponds to one commodity.

In addition, information composed of letters, symbols, pictures, photos and the like can be printed on the surface of the commodity purchase storage medium 400 so that the type or the like of the tobacco 410 identified by the commodity identification information 402 can be recognized by the customer. For example, a design similar to the design of the package of the tobacco 410 identified by the commodity identification information 402 can be printed on the surface of the commodity purchase storage medium 400.

In the embodiment, the commodity purchase storage medium 400 rewritably stores information (hereinafter, may be referred to simply as "payment information") indicating whether the tobacco 410 identified by the commodity identification information 402 has been paid for.

The commodity purchase storage medium 400 is displayed on, for example, a commodity purchase storage medium display shelf 300 in a store. The commodity purchase storage medium 400 displayed on the commodity purchase storage medium display shelf 300 stores information indicating that the payment is not completed as payment information.

The payment information rewrite apparatus 200 rewrites payment information stored in the commodity purchase storage medium 400 as information indicating that the tobacco 410 has been paid for.

The payment information rewrite apparatus 200 is arranged, for example, near the register counter and operated by employees of the store.

The commodity delivery apparatus 100 houses a plurality of tobacco of at least one type. The commodity delivery apparatus 100 reads payment information stored in the commodity purchase storage medium 400 and, if the information indicates that the payment has been completed, extracts and delivers the predetermined tobacco 410 from the housed tobacco 410.

According to a commodity delivery system in the embodiment described above, a customer can purchase and receive tobacco in the manner described below.

First, the customer takes out the commodity purchase storage medium 400 corresponding to the tobacco 410 desired to purchase from the commodity purchase storage media 400 displayed on the commodity purchase storage medium display shelf 300. Next, the customer takes the commodity purchase storage medium 400 to a register counter. If, for example, the customer wants to purchase other commodities, the customer may put such commodities into a shopping basket and may take the commodity purchase storage medium 400 to the register counter together with such commodities.

Then, an employee of the store receives the commodity purchase storage medium 400 taken by the customer and asks the customer to pay for the commodity identified by the commodity identification information 402 attached to the commodity purchase storage medium 400. If payment is received, the employee operates the commodity purchase storage medium 400 and the payment information rewrite apparatus 200. With this operation, payment information stored in the commodity purchase storage medium 400 is rewritten as information indicating that the tobacco 410 has been paid for. Then, the employee hands the rewritten commodity purchase storage medium 400 over to the customer again. If there is any other commodity desired by the customer, an account may be settled here at the same time. The procedure therefor may be the same as the procedure generally performed in stores such as convenience stores.

Next, the customer goes to the commodity delivery apparatus 100 with the commodity purchase storage medium 400 of which payment information has been rewritten as information indicating that the payment has been completed. Then, the customer causes the commodity purchase storage medium 400 and the commodity delivery apparatus 100 to communicate to cause the commodity delivery apparatus 100 to read the payment information. The commodity delivery apparatus 100 performs verification processing of content of the payment information and then delivers the tobacco 410 identified by the commodity identification information 402 attached to the commodity purchase storage medium 400. As a result, the customer can receive the desired tobacco 410.

Details of the commodity delivery system according to the embodiment will be described below.

### <Commodity purchase storage medium 400>

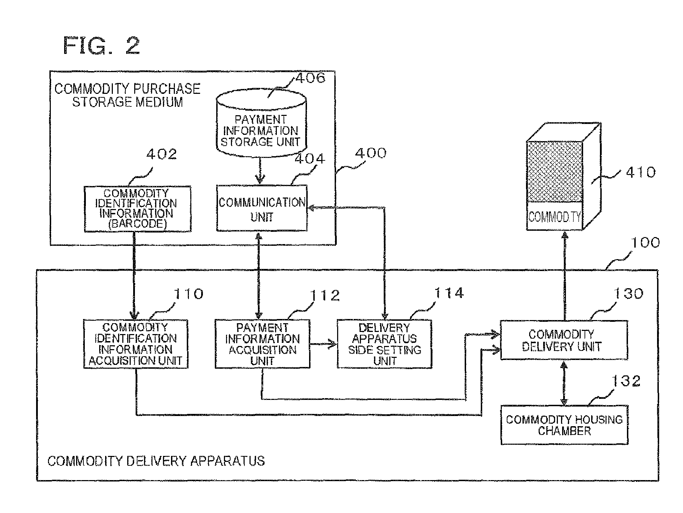

First, the configuration of the commodity purchase storage medium 400 in the embodiment will be described. Fig. 2 illustrates a functional block diagram indicative of an example of the configuration of the commodity purchase storage medium 400 in the embodiment. The commodity purchase storage medium 400 illustrated in Fig. 2 includes the commodity identification information 402, a communication unit 404, and a payment information storage unit 406.

The commodity purchase storage medium 400 in the embodiment is a storage medium configured to be portable and may be, for example, a medium in which an IC chip is embedded. The shape thereof is not specifically limited and may be a card shape or any other shapes. More specifically, the commodity purchase storage medium 400 may be an IC card.

The commodity identification information 402 is information to identify the commodity to be delivered to the customer. The commodity identification information 402 may contain information indicating the quantity of commodities to be delivered. The data format of the commodity identification information 402 held by the commodity purchase storage medium 400 is not specifically limited and may be, for example, a barcode printed on the surface of the commodity purchase storage medium 400. Alternatively, the commodity identification information 402 may be information (electronic data) stored in a storage unit held by the commodity purchase storage medium 400. Incidentally, a Japanese Article Number (JAN) code utilized by a Point of Sale (POS) system may be printed on the commodity purchase storage medium 400 to adopt the JAN code as the commodity identification information 402.

The communication unit 404 is configured to be able to communicate with external devices. The communication method is not specifically limited and may be contact communication or non-contact communication.

The payment information storage unit 406 holds payment information, which is information whether the payment for commodities housed in the commodity delivery apparatus 100 has been completed, in a rewritable state. The payment information held by the payment information storage unit 406 is written with predetermined information ("information indicating that the payment has been completed" or "information indicating that the payment has not been completed") by communication with external devices through the communication unit 404.

### <Commodity delivery apparatus 100>

Next, the configuration of the commodity delivery apparatus 100 in the embodiment will be described. Fig. 2 illustrates a functional block diagram indicative of an example of the configuration of the commodity delivery apparatus 100 in the embodiment. The commodity delivery apparatus 100 in the embodiment illustrated in Fig. 2 includes a commodity identification information acquisition unit 110, a payment information acquisition unit 112, a delivery apparatus side setting unit 114, a commodity delivery unit 130, and a commodity housing chamber 132.

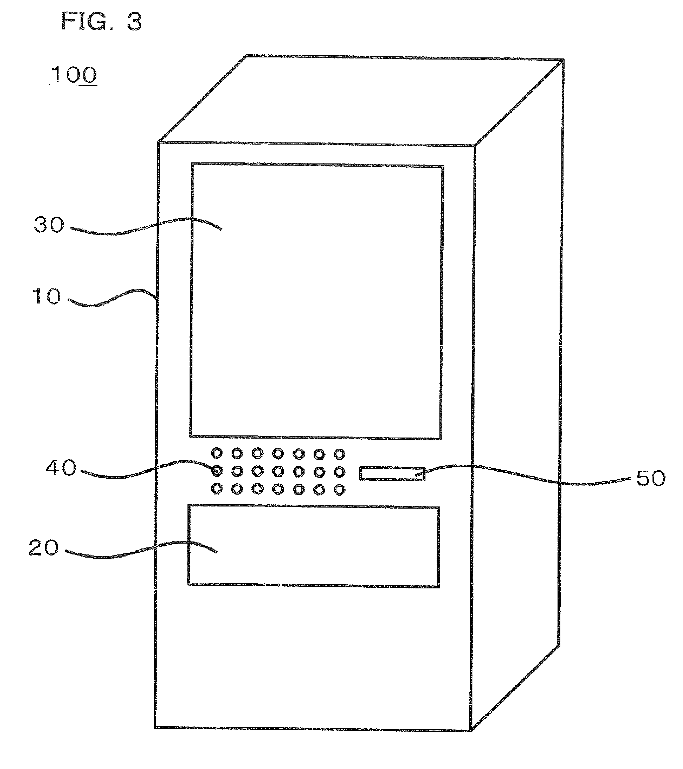

Fig. 3 illustrates an example of an appearance of the commodity delivery apparatus 100 in the present invention. As illustrated in Fig. 3, the commodity delivery apparatus 100 in the present invention includes a box body 10 having a commodity delivery port 20 and each unit configured by hardware and software installed inside the box body 10 and on the side face of the box body 10.

The commodity delivery apparatus 100 includes an opening-and-closing mechanism (not illustrated) to open-and-close the box body 10 and also a lock portion (not illustrated) that controls the opening-and-closing mechanism so that only a person having a predetermined right can open and close the box body 10. The means for realizing the opening-and-closing mechanism is not specifically limited and the opening-and-closing mechanism may be realized by using, for example, a hinge. Also, the means for realizing the lock portion is not specifically limited and the lock portion may be realized by using any lock mechanism using hardware and/or software.

The commodity delivery apparatus 100 also includes an interface 50 to communicate with the commodity purchase storage medium 400. The interface 50 is a region from which electromagnetic waves are emitted and may be a region over which the commodity purchase storage medium 400 is held. Alternatively, the interface 50 may be an insertion port through which the commodity purchase storage medium 400 is inserted. The commodity delivery apparatus 100 in the embodiment includes an IC reader/writer capable of performing contact or non-contact communication with a medium in which an IC chip is embedded and/or a barcode reader and communicates with the commodity purchase storage medium 400 through the interface 50. Then, the commodity delivery apparatus 100 acquires and/or rewrites information held by the commodity purchase storage medium 400.

Further, the commodity delivery apparatus 100 may be provided with a display 30 and a speaker 40.

Returning to Fig. 2, the configuration of each unit will be described in detail.

The commodity housing chamber 132 is positioned inside the box body 10 (see Fig. 3) and houses a plurality of commodities of at least one type. The type of commodity housed in the commodity housing chamber 132 is not specifically limited and may be a commodity sold by a so-called vending machine such as tobacco and canned juice or any other commodities. As described above, only a person having a predetermined right are allowed to open and close the box body 10 by the function of the lock portion. That is, only a person having a predetermined right can touch commodities housed in the commodity housing chamber 132 positioned inside the box body 10. If the commodity is, for example, the tobacco 410, a person having a predetermined right may be an employee entrusted by a sales company of the tobacco 410. Accordingly, contact of employees of a store with commodities can be avoided completely. That is, the commodity delivery apparatus 100 in the embodiment is configured so that customers and employees having no predetermined right cannot come into contact with commodities housed in the commodity housing chamber 132.

The commodity identification information acquisition unit 110 is configured to acquire commodity identification information from the commodity purchase storage medium 400. If the data format of the commodity identification information 402 is, for example, the barcode, the commodity identification information acquisition unit 110 is configured by including a barcode reader. After reading the barcode through the barcode reader, the commodity identification information acquisition unit 110 acquires the commodity identification information 402 by analyzing the read barcode.

Alternatively, if the data format of the commodity identification information 402 is information (electronic data) stored in the storage unit held by the commodity purchase storage medium 400, the commodity identification information acquisition unit 110 is configured by including an IC reader/writer capable of communicating with the communication unit 404 held by the commodity purchase storage medium 400. Then, the commodity identification information acquisition unit 110 communicates with the communication unit 404 held by the commodity purchase storage medium 400 through the IC reader/writer to acquire the commodity identification information 402 stored in the storage unit held by the commodity purchase storage medium 400.

The payment information acquisition unit 112 communicates with the commodity purchase storage medium 400 to acquire payment information. For example, the payment information acquisition unit 112 is configured by including an IC reader/writer capable of communicating with the communication unit 404 held by the commodity purchase storage medium 400. Then, the payment information acquisition unit 112 communicates with the communication unit 404 held by the commodity purchase storage medium 400 through the IC reader/writer to acquire payment information held by the payment information storage unit 406 of the commodity purchase storage medium 400.

If the payment information acquired by the payment information acquisition unit 112 indicates that the payment for commodity has been completed, for example, the commodity delivery unit 130 extracts the commodity identified by the commodity identification information 402 acquired by the commodity identification information acquisition unit 110 from the commodity housing chamber 132 and delivers the extracted commodity through the commodity delivery port 20. The configuration in which the commodity delivery unit 130 extracts a predetermined commodity from the commodity housing chamber 132 and delivers the commodity through the commodity delivery port 20 can be made the same as that of a conventional vending machine.

After the payment information acquisition unit 112 communicates with the communication unit 404 of the commodity purchase storage medium 400 to acquire payment information, the delivery apparatus side setting unit 114 communicates with the communication unit 404 of the commodity purchase storage medium 400 to set the payment information to information indicating that the payment for commodity has not been completed. For example, the delivery apparatus side setting unit 114 is configured by including an IC reader/writer capable of communicating with the communication unit 404 held by the commodity purchase storage medium 400. Then, information indicating that the payment information acquisition unit 112 has acquired payment information by communicating with the communication unit 404 of the commodity purchase storage medium 400 is received, the delivery apparatus side setting unit 114 communicates with the communication unit 404 of the commodity purchase storage medium 400 through the IC reader/writer to set the payment information to information indicating that the payment for commodity has not been completed.

"To set the payment information to information indicating that the payment for commodity has not been completed" means that if the payment information before setting indicates that the payment has been completed, the payment information is rewritten as information indicating that the payment for commodity has not been completed. If the payment information before setting indicates that the payment has not been completed, the payment information maintains the state concerned.

There is no need for the commodity delivery apparatus 100 in the embodiment to have a settlement mechanism to charge for a delivered commodity and receive payment. Thus, the commodity delivery apparatus 100 does not have to be provided with a mechanism to hold changes and cash for settlement so that a simple configuration can be adopted. On the other hand, the commodity delivery apparatus 100 in the embodiment may be configured to have the settlement mechanism so that, like a common vending machine, the customer can directly purchase a commodity from the commodity delivery apparatus 100.

### <Payment information rewrite apparatus 200>

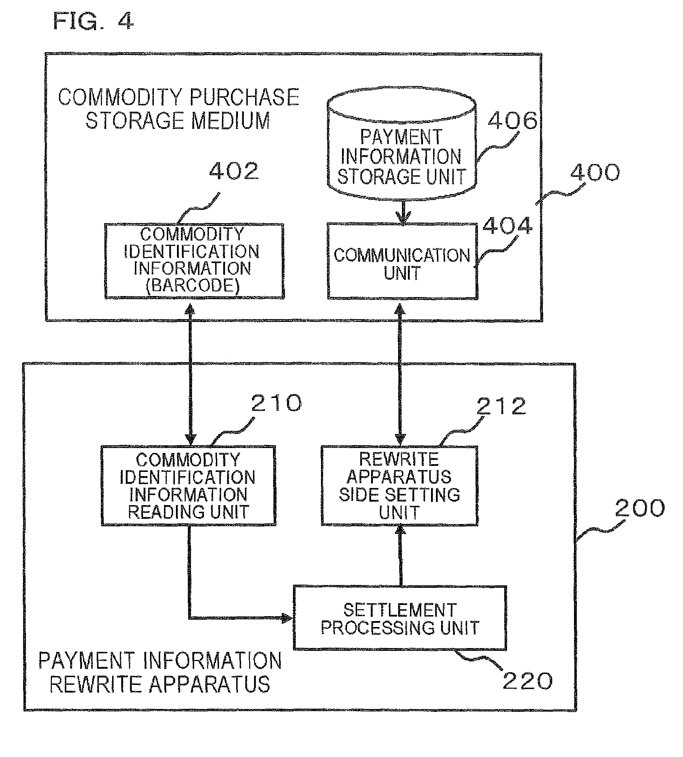

Next, the configuration of the payment information rewrite apparatus 200 in the embodiment will be described. Fig. 4 illustrates a functional block diagram indicative of an example of the configuration of the payment information rewrite apparatus 200 in the embodiment. The payment information rewrite apparatus 200 in the embodiment illustrated in Fig. 4 includes a commodity identification information reading unit 210, a rewrite apparatus side setting unit 212, and a settlement processing unit 220. Incidentally, the commodity purchase storage medium 400 illustrated in Fig. 4 has the same configuration as that of the commodity purchase storage medium 400 illustrated in Fig. 2.

The payment information rewrite apparatus 200 in the embodiment may be, for example, an apparatus in which an IC reader/writer capable of performing contact or non-contact communication with a medium in which an IC chip is embedded and a so-called POS system are connected by wire and/or by radio.

The commodity identification information reading unit 210 is configured to acquire the commodity identification information 402 from the commodity purchase storage medium 400. If the data format of the commodity identification information 402 is, for example, the barcode, the commodity identification information reading unit 210 is configured by including a barcode reader. Then, the commodity identification information reading unit 210 reads a barcode through the barcode reader to acquire the commodity identification information 402 by analyzing the read barcode. Alternatively, if the data format of the commodity identification information 402 is information (electronic data) stored in a storage unit held by the commodity purchase storage medium 400, the commodity identification information reading unit 210 is configured by including an IC reader/writer capable of communicating with the communication unit 404 held by the commodity purchase storage medium 400. Then, the commodity identification information reading unit 210 communicates with the communication unit 404 held by the commodity purchase storage medium 400 through the IC reader/writer to acquire the commodity identification information 402 stored in the storage unit held by the commodity purchase storage medium 400.

The settlement processing unit 220 performs settlement processing of the commodity identified by the commodity identification information 402 read by the commodity identification information reading unit 210. The settlement processing unit 220 may have the same configuration as that of a conventional POS system.

The rewrite apparatus side setting unit 212 communicates with the communication unit 404 held by the commodity purchase storage medium 400 to set payment information stored in the payment information storage unit 406 to information indicating the payment for commodity has been completed. For example, the rewrite apparatus side setting unit 212 is configured by including an IC reader/writer capable of communicating with the communication unit 404 held by the commodity purchase storage medium 400. Then, the rewrite apparatus side setting unit 212 communicates with the communication unit 404 held by the commodity purchase storage medium 400 through the IC reader/writer to set payment information stored in the payment information storage unit 406 to information indicating the payment for commodity has been completed.

"To set the payment information to information indicating that the payment for commodity has been completed" means that if the payment information before being set indicates that the payment has not been completed, the payment information is rewritten as information indicating that the payment for commodity has been completed, if the payment information before being set indicates that the payment has been completed, the state of the payment information is maintained. If the payment information before being set indicates that the payment has been completed, the rewrite apparatus side setting unit 212 may be configured so that the information indicating that the payment has been completed is output through an output apparatus such as a speaker and a display. By adopting such a configuration, the rewrite apparatus side setting unit 212 can notify employees and the customer that the payment for the relevant commodity has been completed. According to the configuration, as a result, avoidance of inconvenience such as duplicate payment of bills can be expected.

On condition that the settlement processing unit 220 has completed settlement processing of commodity, the rewrite apparatus side setting unit 212 may be configured to be able to perform the rewrite processing. That is, the rewrite apparatus side setting unit 212 may be configured to be unable to perform the rewrite processing before the settlement processing unit 220 completes settlement processing of commodity. For example, the rewrite apparatus side setting unit 212 may be configured to be able to perform the rewrite processing on condition that a completion notification of settlement processing is received from the settlement processing unit 220. Alternatively, the rewrite apparatus side setting unit 212 may be configured so that, after counting the number of notifications of settlement processing received from the settlement processing unit 220, the rewrite processing is performed as many times as the count.

With the configuration described above, wrongdoing of causing the commodity purchase storage medium 400 and the payment information rewrite apparatus 200 to communicate with each other and rewriting payment information held by the commodity purchase storage medium 400 with information indicating that the payment for commodity has been completed, though the payment has not been completed, can be prevented.

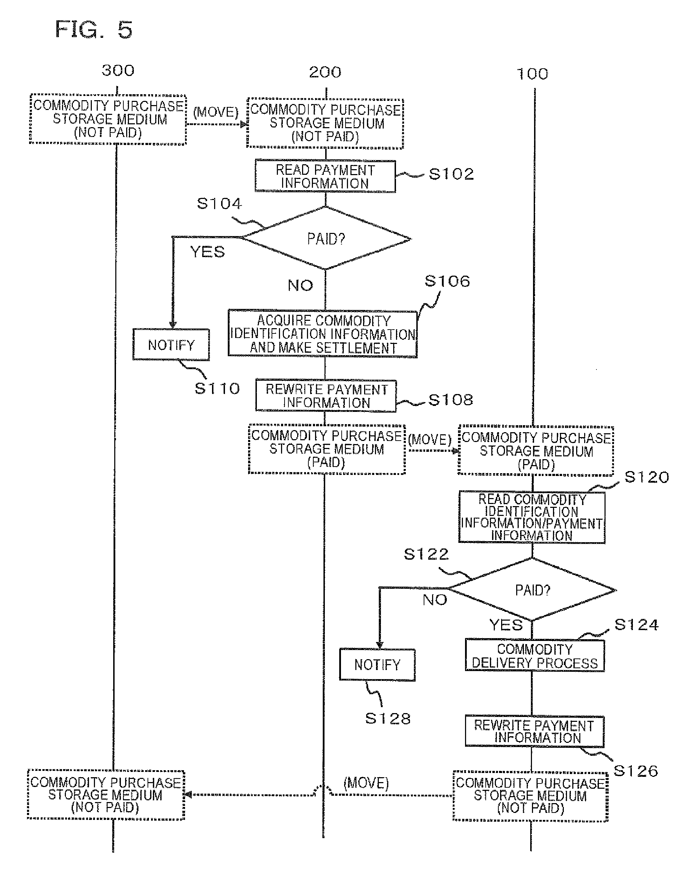

Next, an example of the flow of processing in a commodity delivery system according to the embodiment will be described using the flow chart in Fig. 5 and Figs. 1 to 4.

First, the customer takes out the commodity purchase storage medium 400 corresponding to the commodity desired by the customer to purchase from the commodity purchase storage media 400 displayed on the commodity purchase storage medium display shelf 300. For example, information composed of letters, symbols, pictures, photos and the like so that the commodity (including the type, quantity, and price) can be recognized by the customer is printed on the surface of the commodity purchase storage medium 400 and the customer can identify the commodity according to the information. The customer who has taken out the desired commodity purchase storage medium 400 goes to the register counter, where the payment information rewrite apparatus 200 is arranged, with the commodity purchase storage medium 400.

In accordance with an operation of the employee who has received the commodity purchase storage medium 400 from the customer, the rewrite apparatus side setting unit 212 of the payment information rewrite apparatus 200 acquires payment information from the payment information storage unit 406 of the commodity purchase storage medium 400 (S102). If the payment information indicates that the payment for commodity has been completed (YES in S104), the payment information rewrite apparatus 200 proceeds to S110 to output information indicating that the payment for commodity has been completed through an output apparatus such as a speaker or a display (S110). Accordingly, the payment information rewrite apparatus 200 can notify employees and the customer that the payment for the commodity has been completed. As a result, avoidance of inconvenience such as duplicate payment of bills can be expected.

On the other hand, if the payment information indicates that the payment for commodity has not been completed (NO in S104), the payment information rewrite apparatus 200 proceeds to S106. Then, the commodity identification information acquisition unit 110 acquires the commodity identification information 402 from the commodity purchase storage medium 400 and the settlement processing unit 220 performs settlement processing for the commodity identified by the commodity identification information 402. Next, the rewrite apparatus side setting unit 212 rewrites the payment information held by the commodity purchase storage medium 400 as information indicating that the payment for commodity has been completed (S108).

Subsequently, the employee hands the commodity purchase storage medium 400 of which payment information has been rewritten as information indicating that the payment for commodity has been completed over to the customer. Then, the customer goes to the commodity delivery apparatus 100 with the commodity purchase storage medium 400.

Next, the customer who has come to the commodity delivery apparatus 100 causes the commodity purchase storage medium 400 and the commodity delivery apparatus 100 to communicate with each other. For example, the customer holds the commodity purchase storage medium 400 over the interface 50 (see Fig. 3) of the commodity delivery apparatus 100, brings the commodity purchase storage medium 400 into contact with the interface 50, or inserts the commodity purchase storage medium 400 into the interface 50. Then, in accordance with the above operation of the customer, the commodity identification information acquisition unit 110 and the payment information acquisition unit 112 of the commodity delivery apparatus 100 acquire the commodity identification information 402 and payment information from the commodity purchase storage medium 400 respectively (S120). If the payment information indicates that the payment for commodity has been completed (YES in S122), the commodity delivery unit 130 proceeds to S124 to perform commodity delivery processing. More specifically, the commodity delivery unit 130 extracts the commodity identified by the commodity identification information 402 acquired by the commodity identification information acquisition unit 110 in S120 from the commodity housing chamber 132 and delivers the extracted commodity through the commodity delivery port 20 (see Fig. 3).

Subsequently, the delivery apparatus side setting unit 114 rewrites the payment information held by the commodity purchase storage medium 400 as information indicating that the payment for commodity has not been completed (S126).

Incidentally, the commodity delivery apparatus 100 may be provided with an insertion port to recover the commodity purchase storage medium 400 so that the commodity purchase storage medium 400 is recovered by accepting an insertion of the commodity purchase storage medium 400 through the insertion port. Subsequently, the recovered commodity purchase storage medium 400 is displayed on the commodity purchase storage medium display shelf 300 again.

On the other hand, if the payment information indicates that the payment for commodity has not been completed (NO in S122), the commodity delivery apparatus 100 outputs predetermined information through the output apparatus such as a speaker and a display (S128).

Content of information output in S128 is not specifically limited and, for example, information indicating that because the payment for commodity has not been completed, the commodity cannot be delivered may be output. In addition to the information, information showing the purchase procedure of commodity may be output. More specifically, information explaining a purchase procedure like "(1) First, please take the commodity purchase storage medium 400 to the register counter and hand the commodity purchase storage medium 400 over to an employee. (2) Next, please pay for the commodity corresponding to the commodity purchase storage medium 400. (3) Then, please let the employee rewrite payment information stored in the commodity purchase storage medium 400 as information indicating that the payment for the commodity has been completed. (4) Next, please come to the commodity delivery apparatus 100 with the commodity purchase storage medium 400 of which payment information had rewritten as information indicating that the payment for commodity has been completed, and (5) please cause the commodity purchase storage medium 400 and the commodity delivery apparatus 100 to communicate with each other through the interface 50 of the commodity delivery apparatus 100 (for example, holding over, contacting with, inserting into)" using letters, pictures, photos or the like may be output.

In addition, request information such as "If you do not want to purchase the commodity, return the corresponding commodity purchase storage medium 400 to the commodity purchase storage medium display shelf 300" may be output.

Next, modifications of a commodity delivery system in the embodiment will be described.

(1) The commodity delivery apparatus 100 of a commodity delivery system in the embodiment may be configured without the commodity identification information acquisition unit 110. In such a case, the commodity delivery apparatus 100 cannot acquire the commodity identification information 402 from the commodity purchase storage medium 400. However, if the commodity housing chamber 132 houses a plurality of commodities of one type only, the commodity delivery unit 130 of the commodity delivery apparatus 100 delivers the relevant commodity only. Therefore, the commodity delivery apparatus 100 in the embodiment can be configured without the commodity identification information acquisition unit 110.

Even if the commodity housing chamber 132 houses a plurality of commodities of two types or more, the commodity delivery apparatus 100 in the embodiment can be configured without the commodity identification information acquisition unit 110 if the commodity delivery apparatus 100 in the embodiment is configured, for example, as described below.

First, the commodity housing chamber 132 houses a plurality of commodities of two types or more of the same price. Then, the commodity delivery apparatus 100 may further include a specified information receiving unit that receives input of specified information specifying one commodity from among the plurality of types of commodities housed in the commodity housing chamber 132 from the customer when payment information acquired by the payment information acquisition unit 112 indicates that the payment for the commodity has been completed.

The specified information receiving unit receives input of specified information from the customer through an input apparatus provided in the commodity delivery apparatus 100. The input apparatus is not specifically limited and any structural element such as a touch panel display and a button provided in the commodity delivery apparatus 100 may be applied.

Then, the commodity delivery unit 130 extracts the commodity identified by the specified information received by the specified information receiving unit from the commodity housing chamber 132 and delivers the extracted commodity through the commodity delivery port 20.

(2) The commodity delivery apparatus 100 of a commodity delivery system in the embodiment may also be configured without the delivery apparatus side setting unit 114. In such a case, the commodity delivery system in the embodiment may include a rewrite apparatus including the delivery apparatus side setting unit 114 separately from the commodity delivery apparatus 100.

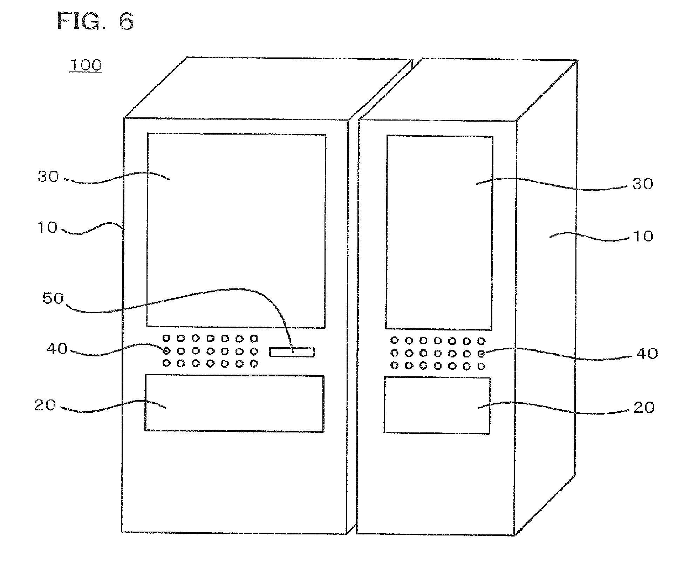

(3) The commodity delivery apparatus 100 of a commodity delivery system in the embodiment may be configured, as illustrated in Fig. 6, by a host machine (apparatus on the left side in Fig. 6) and a slave machine (apparatus on the right side in Fig. 6). The host machine is configured in the same manner as the commodity delivery apparatus 100 illustrated in Fig. 3 except that the host machine includes a communication unit to communicate with the slave machine by wire and/or by radio. The slave machine is configured in the same manner as the commodity delivery apparatus 100 illustrated in Fig. 3 except that the slave machine does not have the interface 50 and includes a communication unit to communicate with the host machine by wire and/or by radio.

For example, the commodity housing chamber 132 held by the slave machine houses commodities of types different from those of commodities housed in the commodity housing chamber 132 held by the host machine. If payment information acquired by the payment information acquisition unit 112 indicates that the payment for commodity has been completed and the commodity identified by the commodity identification information 402 acquired by the commodity identification information acquisition unit 110 is a commodity housed in the commodity housing chamber 132 held by the slave machine, the commodity delivery unit 130 held by the host machine sends information instructing delivery of the commodity to the commodity delivery unit 130 held by the slave machine. Then, the commodity delivery unit 130 held by the slave machine that has received the information extracts the commodity from the commodity housing chamber 132 held by the slave machine and delivers the commodity through the commodity delivery port 20.

(4) The payment information rewrite apparatus 200 of a commodity delivery system in the embodiment may be configured without the commodity identification information reading unit 210 and the settlement processing unit 220. That is, the commodity delivery system in the embodiment may include the payment information rewrite apparatus 200 including the rewrite apparatus side setting unit 212 as a different apparatus separate and independent of the POS system.

(5) The commodity delivery apparatus 100 of a commodity delivery system in the embodiment can be installed outside a store, for example, in train stations. The commodity delivery apparatus 100 may be configured by housing, for example, relatively heavy commodities such as wine for delivery. In such a case, the customer pays for the commodity using the commodity purchase storage medium 400 in a store and takes the commodity purchase storage medium 400 home. Then, the customer causes the commodity delivery apparatus 100 installed near the home and the commodity purchase storage medium 400 the customer has taken home to communicate with each other to be able to receive delivery of the commodity from the commodity delivery apparatus 100. As a result, an advantage of being able to reduce the time and distance to carry heavy goods can be achieved.

A commodity delivery system in the embodiment may be a modification combining one or more of (1) to (5) described above.

Next, operations/effects of a commodity delivery system according to the embodiment will be described.

(1) A commodity delivery apparatus held by a commodity delivery system according to the embodiment has the commodity housing chamber 132 provided inside the box body 10 of which opening-and-closing mechanism is controlled by a lock portion and thus, commodities housed in the commodity delivery apparatus 100 can be touched by only a person having a predetermined right. That is, customers and employees having no predetermined right cannot touch commodities housed in the commodity delivery apparatus 100.

Thus, in a commodity delivery system in the embodiment, the settlement of commodities can be performed and the commodities can be delivered in a state in which customers and employees having no predetermined right do not touch commodities.

Therefore, according to a commodity delivery system and the commodity delivery apparatus 100 in the embodiment, criminal acts such as shoplifting by customers or employees can effectively be prevented.

(2) Also, in a commodity delivery system according to the embodiment, commodities are delivered through the commodity delivery apparatus 100 and thus, it does not set up troublesome work such as displaying commodities behind a register counter, taking out a relevant commodity, and handing the commodity over to a customer. That is, according to a commodity delivery system in the embodiment, smooth delivery of commodity is realized.

(3) Also, in a commodity delivery system according to the embodiment, if payment information acquired from the commodity purchase storage medium 400 indicates that the payment for commodity has been completed, the rewrite apparatus side setting unit 212 of the payment information rewrite apparatus 200 can be configured to output information indicating that the payment for commodity has been completed through an output apparatus such as a speaker and a display. In such a case, inconvenience such as a duplicate payment can be avoided.

(4), Further, in a commodity delivery system according to the embodiment, the rewrite apparatus side setting unit 212 of the payment information rewrite apparatus 200 can be configured to be unable to perform rewrite processing before the settlement processing unit 220 completes settlement processing of commodity. In such a case, it can prevent wrongdoing of causing the commodity purchase storage medium 400 and the payment information rewrite apparatus 200 to communicate with each other, rewriting payment information held by the commodity purchase storage medium 400 with information indicating that the payment for commodity has been completed, though the payment actually has not been completed.

Commodities of which sale to minority is prohibited such as tobacco require authentication of adult. For example, when tobacco is purchased from a common vending machine in Japan, a special certification medium called taspo is needed. Thus, problems such as needing a time to prepare for taspo and being unable to purchase tobacco because taspo is forgotten to carry arise for consumers. In stores, on the other hand, tobacco can be purchased by presenting a common identification card such as a driver's license. Thus, in recent years, demands to purchase tobacco in stores are increasing. However, in the form of selling tobacco in stores, as described above, problems such as shoplifting by customers or employees can arise. According to the embodiment, a problem of a consumer's time needed for preparations can be solved and also a problem of shoplifting by customers or employees can be solved.

Incidentally, the commodity delivery apparatus 100 according to the embodiment may be realized by installing a program to control, for example, a commodity delivery apparatus including a box body having a commodity delivery port and a commodity housing chamber positioned inside the box body and housing a plurality of commodities of at least one type to cause a computer to function as a payment information acquisition means that communicates with a commodity purchase storage medium holding payment information, which is information indicating whether the payment for the commodity has been completed, to acquire the payment information and a commodity delivery means that extracts the commodity from the commodity housing chamber and delivers the commodity through the commodity delivery port if the payment information acquired by the payment information acquisition means indicates that the payment for the commodity has been completed.

### «Second embodiment»

In addition to the configuration of the commodity delivery apparatus 100 in the first embodiment, the commodity delivery apparatus 100 in a commodity delivery system according to the embodiment further includes an insertion acceptance unit that accepts an insertion of the commodity purchase storage medium 400 and a recovery unit that accommodates the commodity purchase storage medium 400 of which insertion has been accepted.

The configuration of the commodity delivery apparatus 100 in the embodiment will be described below. The commodity purchase storage medium 400 and the payment information rewrite apparatus 200 have the same configurations as those in the first embodiment and a description thereof will not be repeated.

### <Commodity delivery apparatus 100>

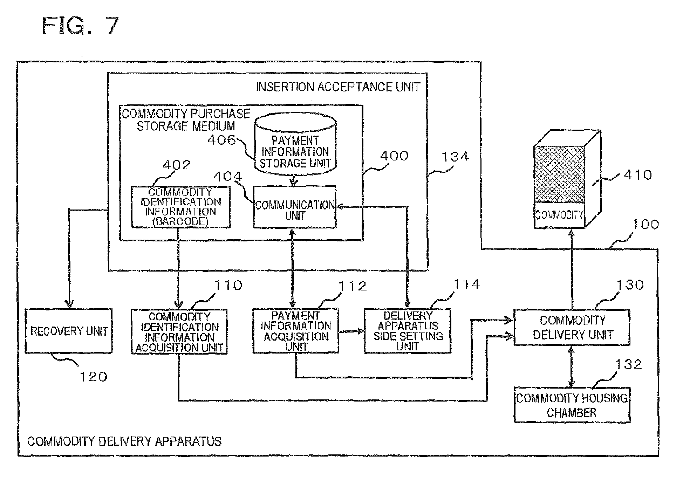

Fig. 7 illustrates a functional block diagram indicative of an example of the configuration of the commodity delivery apparatus 100 in the embodiment. The commodity delivery apparatus 100 in the embodiment illustrated in Fig. 7 includes the commodity identification information acquisition unit 110, the payment information acquisition unit 112, the delivery apparatus side setting unit 114, the commodity delivery unit 130, the commodity housing chamber 132, an insertion acceptance unit 134, and a recovery unit 120.

Fig. 7 illustrates the commodity purchase storage medium 400 of which insertion is accepted by the insertion acceptance unit 134. The commodity identification information acquisition unit 110, the payment information acquisition unit 112, and the delivery apparatus side setting unit 114 in the embodiment acquires and/or rewrites predetermined information from the commodity purchase storage medium 400 positioned inside the commodity delivery apparatus 100 after the insertion acceptance unit 134 accepts the insertion thereof.

The insertion acceptance unit 134 and the recovery unit 120 will be described below. Other units are the same as those in the first embodiment and a description thereof will not be repeated.

The insertion acceptance unit 134 accepts the insertion of the commodity purchase storage medium 400 through an insertion port (for example, reference numeral 50) provided in the box body 10 (see Fig. 3) to accept the insertion of the commodity purchase storage medium 400. The insertion port and the insertion acceptance unit 134 may have the same configuration as those of conventional technology.

After the payment information acquisition unit 112 acquires payment information from the commodity purchase storage medium 400 of which insertion is accepted by the insertion acceptance unit 134, the recovery unit 120 accommodates the commodity purchase storage medium 400 in a recovery chamber. The recovery unit 120 may accommodate the commodity purchase storage medium 400 in the recovery chamber after payment information is acquired from the commodity purchase storage medium 400 of which insertion is accepted by the insertion acceptance unit 134 and the delivery apparatus side setting unit 114 sets the payment information held by the commodity purchase storage medium 400 to information indicating that the payment for commodity has not been completed.

When the commodity purchase storage medium 400 of which insertion is accepted by the insertion acceptance unit 134 holds the commodity identification information 402, the recovery unit 120 may classify and accommodate the commodity purchase storage medium 400 based on the commodity identification information 402 held by the commodity purchase storage medium 400 after acquiring the payment information acquired by the payment information acquisition unit 112. For example, the recovery unit 120 may includes a plurality of individual chambers corresponding to each of commodities identified by the commodity identification information 402 as recovery chambers to accommodate the commodity purchase storage medium 400. Then, when accommodating the commodity purchase storage medium 400 in the recovery chamber, the recovery unit 120 identifies the commodity identified by the commodity identification information 402 held by the commodity purchase storage medium 400 to be recovered into the recovery chamber and accommodates the commodity purchase storage medium 400 in the individual chamber corresponding to the identified commodity.

According to a commodity delivery system in the embodiment, the commodity delivery apparatus 100 requests the insertion of the commodity purchase storage medium 400 into the commodity delivery apparatus 100 as a precondition for commodity delivery. Thus, it can reduce a recycling rate of the commodity purchase storage medium 400 caused by the commodity purchase storage medium 400 being taken home or thrown away by customers. As a result, stable system operation and cost reductions for system operation can be realized.

### «Third embodiment»

In addition to the configurations of the commodity delivery apparatus 100 in the first and second embodiments, the commodity delivery apparatus 100 in a commodity delivery system in the embodiment further includes a display and a commodity information display unit that displays commodity information through the display.

The configuration of the commodity delivery apparatus 100 in the embodiment will be described below. The commodity purchase storage medium 400 and the payment information rewrite apparatus 200 have the same configurations as those in the first and second embodiments and a description thereof will not be repeated.

### <Commodity delivery apparatus 100>

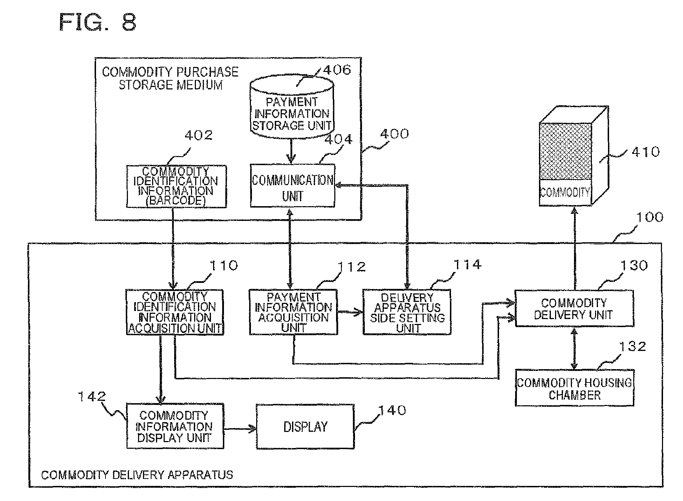

Fig. 8 illustrates a functional block diagram indicative of an example of the configuration of the commodity delivery apparatus 100 in the embodiment. The commodity delivery apparatus 100 in the embodiment illustrated in Fig. 8 includes the commodity identification information acquisition unit 110, the payment information acquisition unit 112, the delivery apparatus side setting unit 114, the commodity delivery unit 130, the commodity housing chamber 132, a display 140, and a commodity information display unit 142.

The commodity information display unit 142 will be described below. Other units are the same as those in the first and second embodiments and a description thereof will not be repeated.

The commodity information display unit 142 displays information on commodities housed in the commodity housing chamber 132 through the display 140. In synchronization with video output through the display 140, the commodity information display unit 142 may output sound through a speaker (see Fig. 3).

When, for example, the commodity information display unit 142 recognizes the commodity identified by the commodity identification information 402 acquired by the commodity identification information acquisition unit 110, the commodity information display unit 142 acquires and outputs information on the commodity. The means for acquiring information output by the commodity information display unit 142 is not specifically limited and, for example, the commodity information display unit 142 may hold information to be output by associating with each commodity in advance so that information to be output can be acquired from the held information. Alternatively, the commodity delivery apparatus 100 may be configured to be able to connect to a network such as the Internet so that the commodity information display unit 142 can acquire information to be output from a server placed in the network.

According to a commodity delivery system in the embodiment, the customer can acquire information on the commodity by causing the commodity purchase storage medium 400 taken out of the commodity purchase storage medium display shelf 300 to communicate with the commodity delivery apparatus 100. As a result, when deciding the commodity to purchase, a reasonable decision can be made by acquiring effective information.

### «Fourth embodiment»

In addition to one of the configurations in the first to third embodiments, a commodity delivery system in the embodiment further includes a unit that manages the quantity of stock of commodities held by the commodity delivery apparatus 100 and makes a notification when the quantity of stock has ran up to a predetermined quantity.

The configurations of the commodity delivery apparatus 100 and the payment information rewrite apparatus 200 in the embodiment will be described below. The configuration of the commodity purchase storage medium 400 is the same as that of one of the first to third embodiments and a description thereof will not be repeated.

### <commodity delivery apparatus 100>

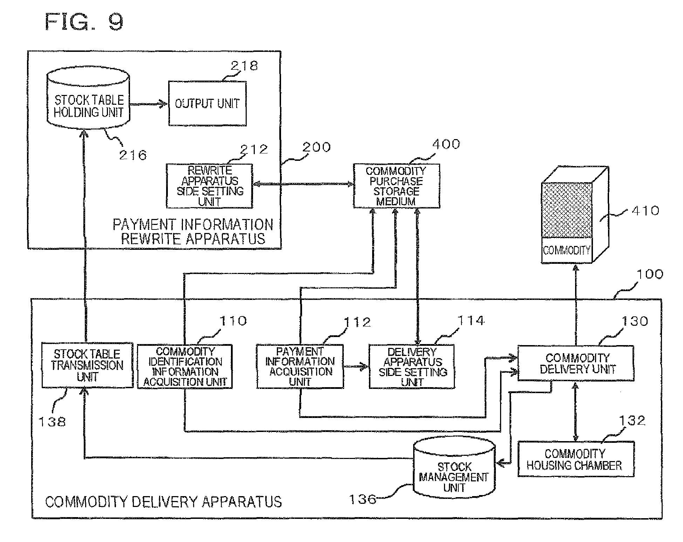

Fig. 9 illustrates a functional block diagram indicative of an example of the configuration of the commodity delivery apparatus 100 in the embodiment. The commodity delivery apparatus 100 in the embodiment illustrated in Fig. 9 includes the commodity identification information acquisition unit 110, the payment information acquisition unit 112, the delivery apparatus side setting unit 114, the commodity delivery unit 130, the commodity housing chamber 132, a stock management unit 136, and a stock table transmission unit 138.

The stock management unit 136 and the stock table transmission unit 138 will be described below. Other units are the same as those in one of the first to third embodiments and a description thereof will not be repeated.

The stock management unit 136 manages a stock table showing the quantity of stock of commodities housed in the commodity housing chamber 132. More specifically, the stock management unit 136 acquires information on fluctuation in quantity of stock of commodities housed in the commodity housing chamber 132 from, for example, the commodity delivery unit 130 and updates the stock table based on the information. The stock management unit 136 described above may have the same configuration as that of conventional technology.

The stock table transmission unit 138 transmits the stock table to the payment information rewrite apparatus 200. For example, the stock table transmission unit 138 transmits the stock table to the payment information rewrite apparatus 200 each time the stock table is updated and/or at predetermined intervals. The transmission means is not specifically limited and any means can be applied.

### <Payment information rewrite apparatus 200>

Fig. 9 illustrates a functional block diagram indicative of an example of the configuration of the payment information rewrite apparatus 200 in the embodiment. The payment information rewrite apparatus 200 in the embodiment illustrated in Fig. 9 includes the rewrite apparatus side setting unit 212, a stock table holding unit 216, and an output unit 218.

The stock table holding unit 216 and the output unit 218 will be described below. Other units are the same as those in one of the first to third embodiments and a description thereof will not be repeated.

The stock table holding unit 216 acquires and holds the stock table transmitted from the stock table transmission unit 138. The stock table held by the stock table holding unit 216 may be configured so that content thereof is updated to the latest information each time a new stock table is acquired from the stock table transmission unit 138 or acquired stock tables are accumulated.

The output unit 218 recognizes an out-of-stock commodity by referring to the stock table held by the stock table holding unit 216 and, when the commodity purchase storage medium 400 to deliver the out-of-stock commodity become a communicating state with the rewrite apparatus side setting unit 212, outputs information indicating that the commodity is out of stock through the output apparatus such as a speaker and a display.

When the commodity identification information reading unit 210 acquires the commodity identification information 402 from the commodity purchase storage medium 400 to deliver an out-of-stock commodity, the output unit 218 may use the acquisition as a trigger to output information indicating that the commodity is out of stock through the output apparatus such as a speaker and display.

In addition, the output unit 218 may recognize a commodity of which the quantity of stock has fallen to a predetermined quantity or below by referring to the stock table held by the stock table holding unit 216 and output information indicating that the quantity of stock of the commodity has fallen to a predetermined quantity or below through the output apparatus such as a speaker and a display.

According to a commodity delivery system in the embodiment, if the relevant commodity is not in stock in the commodity delivery apparatus 100 before settlement processing of the commodity is performed, employees of a store can recognize the above fact. As a result, it can avoid inconvenience that troublesome work such as a refund must be done when recognized that a commodity for which payment is already received is found out of stock.

Also, according to a commodity delivery system in the embodiment, employees of a store can recognize a commodity whose quantity of stock in the commodity delivery apparatus 100 falls to a predetermined quantity or below and also recognize the quantity thereof. In such a case, employees of the store can match the number of the commodity purchase storage media 400 to deliver the commodity displayed on the commodity purchase storage medium display shelf 300 to the quantity of stock in the commodity delivery apparatus 100. As a result, inconvenience that, even if a commodity is out of stock, the commodity purchase storage medium 400 to purchase the commodity is displayed on the commodity purchase storage medium display shelf 300 can be avoided.

Also, according to a commodity delivery system in the embodiment, employees of a store can recognize a commodity of which the quantity of stock in the commodity delivery apparatus 100 falls to a predetermined quantity or below. As a result, a person having a predetermined right can replenish the stock before the commodity runs out of stock.

Incidentally, a commodity delivery system in the embodiment can be configured by further including the commodity purchase storage medium display shelf 300.

The commodity purchase storage medium display shelf 300 can be configured to include a shelf side stock table holding unit (not illustrated) that receives the stock table from the stock table transmission unit 138 of the commodity delivery apparatus 100 and holds the received stock table, and a display state control unit (not illustrated) that controls the display state of display shelves where the commodity purchase storage media 400 are displayed by referring to the stock table held by the shelf side inventory holding unit.

The shelf side stock table holding unit may have the same configuration as that of the stock table holding unit 216 held by the payment information rewrite apparatus 200.

The display state control unit refers to the stock table. When, for example, an out-of-stock commodity is recognized, the display state control unit can instead display a card to which information like "Out of stock" is attached without displaying the commodity purchase storage medium 400 corresponding to the commodity on the display shelf. In addition, if, for example, a commodity of which the quantity of stock has fallen to a predetermined quantity or below is recognized, the number of the commodity purchase storage media 400 displayed on the display shelf can be matched to the quantity of stock. The configuration of such a display state control unit can be realized by conforming to conventional technology.

It is apparent that the present invention is not limited to the above embodiment, and may be modified and changed without departing from the scope and spirit of the invention.

## Claims

1. A commodity delivery apparatus, comprising:
a box body having a commodity delivery port;
an opening-and-closing mechanism to open-and-close the box body;
a lock portion that controls the opening-and-closing mechanism so that only a person having a predetermined right can open-and-close the box body;
a commodity housing chamber positioned inside the box body and housing a plurality of commodities of at least one type;
a payment information acquisition unit that acquires payment information, which is information indicating whether a payment for the commodity has been completed, from a commodity purchase storage medium holding the payment information; and
a commodity delivery unit that, if the payment information acquired by the payment information acquisition unit indicates that the payment for the commodity has been completed, extracts the commodity from the commodity housing chamber and delivers the commodity through the commodity delivery port.

2. The commodity delivery apparatus according to claim 1, further comprising a commodity identification information acquisition unit that acquires commodity identification information, which is information to identify the commodity, from the commodity purchase storage medium further holding the commodity identification information,
wherein if the payment information acquired by the payment information acquisition unit indicates that the payment for the commodity has been completed, the commodity delivery unit extracts the commodity identified by the commodity identification information acquired by the commodity identification information acquisition unit from the commodity housing chamber and delivers the commodity through the commodity delivery port.

3. The commodity delivery apparatus according to claim 1 or 2, further comprising a delivery apparatus side setting unit that sets, after the payment information acquisition unit acquires the payment information, the payment information held by the commodity purchase storage medium to information indicating that the payment for the commodity has not been completed.

4. The commodity delivery apparatus according to any of claims 1 to 3, further comprising:
an insertion acceptance unit that accepts an insertion of the commodity purchase storage medium through an insertion port provided in the box body; and
a recovery unit that accommodates the commodity purchase storage medium after the payment information acquisition unit acquires the payment information.

5. The commodity delivery apparatus according to claim 4,
wherein the insertion acceptance unit accepts the insertion of the commodity purchase storage medium holding the commodity identification information, which is the information to identify the commodity, and
the recovery unit that, after the payment information acquisition unit acquires the payment information, classifies the commodity purchase storage medium based on the commodity identification information held by the commodity purchase storage medium for the accommodation.

6. The commodity delivery apparatus according to any of claims 1 to 5, further comprising:
a display; and
a commodity information display unit that displays information on the commodities housed in the commodity housing chamber through the display.

7. The commodity delivery apparatus according to any of claims 1 to 6, wherein the commodity is tobacco.

8. A commodity delivery system, comprising:
the commodity delivery apparatus according to any of claims 1 to 7; and
a payment information rewrite apparatus having a rewrite apparatus side setting unit that sets the payment information held by the commodity purchase storage medium to the information indicating that the payment for the commodity has been completed.

9. The commodity delivery system according to claim 8, further comprising
a commodity purchase storage medium including:
a communication unit; and
a payment information storage unit holding payment information, which is information indicating whether the payment for the commodity housed in the commodity housing chamber of the commodity delivery apparatus has been completed, in a rewritable state.

10. The commodity delivery system according to claim 9, wherein the commodity purchase storage medium further includes commodity identification information, which is information to identify the commodity.

11. The commodity delivery system according to claim 10,
wherein the commodity purchase storage medium is an IC card, and
the IC card has a surface on which a barcode is printed as the commodity identification information.

12. The commodity delivery system according to any of claims 8 to 11,
wherein the commodity delivery system is provided in a store selling the commodities,
the payment information rewrite apparatus is installed so as to be operable by employees of the store and inoperable by customers, and
the commodity delivery apparatus is installed so as to be operable by the customers.

13. The commodity delivery system according to any of claims 9 to 11,
wherein the commodity delivery system is provided in a store selling the commodities,
the commodity purchase storage media are displayed in the store so as to be handled by customers, and
the payment information rewrite apparatus is installed so as to be operable by employees of the store and inoperable by the customers, and
the commodity delivery apparatus is installed so as to be operable by the customers.

14. The commodity delivery system according to any of claims 8 to 13,
wherein the commodity delivery apparatus includes:
a stock management unit that manages a stock table showing the quantity of stock of the commodity housed in the commodity housing chamber; and
a stock table transmission unit that transmits the stock table to the payment information rewrite apparatus, and
the payment information rewrite apparatus includes:
a stock table holding unit that acquires and holds the stock table transmitted from the stock table transmission unit; and
an output unit that recognizes the out-of-stock commodity by referring to the stock table held by the stock table holding unit and, when the commodity purchase storage medium to deliver the out-of-stock commodity becomes a communicating state with the rewrite apparatus side setting unit, outputs information indicating that the commodity is out of stock.

15. A program to control a commodity delivery apparatus including:
a box body having a commodity delivery port; and
a commodity housing chamber positioned inside the box body and housing a plurality of commodities of at least one type,
wherein the program causes a computer to function as:
a payment information acquisition means that acquires payment information, which is information indicating whether a payment for the commodity has been completed, from a commodity purchase storage medium holding the payment information; and
a commodity delivery means that extracts the commodity from the commodity housing chamber and delivers the commodity through the commodity delivery port if the payment information acquired by the payment information acquisition means indicates that the payment for the commodity has been completed.

16. A commodity delivery method using a commodity delivery apparatus including
a box body having a commodity delivery port, and
a commodity housing chamber positioned inside the box body and housing a plurality of commodities of at least one type, comprising:
acquiring payment information, which is information indicating whether a payment for the commodity has been completed, from a commodity purchase storage medium holding the payment information; and
extracting the commodity from the commodity housing chamber and delivering the commodity through the commodity delivery port if the payment information acquired by the payment information acquisition unit indicates that the payment for the commodity has been completed.
